**Europäisches Patentamt**

**European Patent Office**

**Office européen des brevets**

(11) Veröffentlichungsnummer: **0 229 335**
**A2**

(12) # EUROPÄISCHE PATENTANMELDUNG

(21) Anmeldenummer: **86117312.8**

(51) Int. Cl.³: **C 12 G 3/08**

(22) Anmeldetag: **12.12.86**

(30) Priorität: **09.01.86 DE 3600352**

(43) Veröffentlichungstag der Anmeldung:
**22.07.87 Patentblatt 87/30**

(84) Benannte Vertragsstaaten:
**AT CH ES FR IT LI**

(71) Anmelder: **Barth, Norbert**
**Bergweg 20**
**D-6228 Eltville 3(DE)**

(72) Erfinder: **Barth, Norbert**
**Bergweg 20**
**D-6228 Eltville 3(DE)**

(74) Vertreter: **Blumbach Weser Bergen Kramer Zwirner**
**Hoffmann Patentanwälte**
**Radeckestrasse 43**
**D-8000 München 60(DE)**

(54) Verfahren zur Herstellung von vergorenen Getränken, insbesondere Wein, mit verringertem Alkoholgehalt.

(57) Es wird ein Verfahren zur Herstellung von vergorenen Getränken mit verringertem Alkoholgehalt, beispielsweise alkoholreduziertem oder alkoholfreiem Wein, beschrieben, bei dem der Alkohol durch Dialyse entzogen und dann durch Vakuumdestillation aus der Dialysatflüssigkeit entfernt wird. Die Besonderheit besteht darin, daß als Dialysatflüssigkeit das vergorene Getränk im ursprünglichen Zustand benutzt wird und daß außerdem die bei der Vakuumdestillation neben dem Ethanolgehalt anfallenden, im Fertigprodukt erwünschten Aroma- und Geschmacksstoffe der Dialysatflüssigkeit wieder zugeführt werden.

Croydon Printing Company Ltd.

EP 0 229 335 A2

1

## Verfahren zur Herstellung von vergorenen Getränken, insbesondere Wein, mit verringertem Alkoholgehalt

Es sind mehrere Verfahren zur Reduzierung des Alkoholgehaltes in vergorenen Getränken, beispielsweise Wein, Bier, Sekt, bekannt. So wird bei einem bekannten Verfahren (europäische Veröffentlichungsschrift oo58634) das vergorene Getränk einer fraktionierten Destillation unterzogen, um den Alkohol (Ethanol) herauszuziehen. Um das Getränk zur Vermeidung von geschmacklichen Beeinflussungen keiner zu hohen Temperaturbelastung auszusetzen, kann man dabei unter Vakuum destillieren. Bei dem bekannten Verfahren werden auch bereits die bei der fraktionierten Destillation neben dem Ethanol anfallenden Geschmacks- und Aromastoffe dem fertigen Getränk wieder zugesetzt. Trotz Anwendung der fraktionierten Vakuumdestillation sowie von Verdampfern, die eine möglichst schnelle und schonende Eindampfung ermöglichen, beispielsweise von Dünnschichtverdampfern, treten bei dem fertigen Produkt geschmackliche Beeinträchtigungen und gravierende Abweichungen vom Geschmack des ursprünglichen Getränks auf.

Bekannt ist auch eine Extraktion des Ethanols im vergorenen Getränk mit Hilfe von organischen Lösungsmitteln. Abgesehen davon, daß der Anwendung eines solchen Verfahrens lebensmittelrechtliche Bestimmungen entgegenstehen, tritt auch hier eine geschmackliche Beeinträchtigung auf.

Weiterhin ist es in mehreren Varianten bekannt, eine Reduzierung des Alkoholgehaltes durch eine Dialyse zu erzielen. Dabei strömt auf der einen Seite einer Dialysemembran das vergorene Getränk, beispielsweise Wein, und
auf der anderen Seite vorzugsweise im Gegenstrom eine
Dialyseflüssigkeit, beispielsweise Wasser. Der Differenzdruck zwischen den beiden Flüssigkeiten ist sehr gering
oder sogar Null. Maßgebend für den Stoffaustausch ist
die Diffusion durch die Membran, die vom Konzentrationsverhältnis der jeweiligen Stoffe auf den beiden Seiten
der Membran abhängt. Es wird dazu verwiesen auf die europäische Patentschrift oo21247 sowie auch die DE-OS
30 09 829. Hieraus ist es auch bereits bekannt, als
Dialysatflüssigkeit ein alkoholfreies Getränk, beispielsweise einen Fruchtsaft oder auch ein dem zu dialysierenden
Getränk entsprechendes Getränk zu verwenden, sowie den
dialysierten Alkohol durch Vakuumdestillation zu entfernen.

Da bei allen bekannten Verfahren noch geschmackliche Beeinträchtigungen des fertigen Produktes auftreten,
liegt der Erfindung die Aufgabe zugrunde, ein Verfahren
zur Herstellung von vergorenen Getränken mit verringertem
Alkoholgehalt, und zwar insbesondere von Wein, anzugeben,
bei dem neben der Alkoholreduzierung praktisch keine geschmackliche Beeinträchtigung oder Veränderung auftritt.
Die Lösung der Aufgabe ist im Patentanspruch 1 angegeben.

Da als Dialysatflüssigkeit das vergorene Getränk
selbst , und zwar im ursprünglichen Zustand, verwendet
wird, ergibt sich bezüglich der erwünschten Geschmacks-
und Aromastoffe kein Konzentrationsgefälle auf den beiden
Seiten der Dialysemembran, so daß der ursprüngliche Geschmack erhalten bleibt. Soweit bei der fraktionierten
Vakuumdestillation in nicht zu vermeidender Weise erwünschte Aromastoffe neben dem Ethanolgehalt herausgezogen
werden, tritt wegen der Rückführung dieser erwünschten
Stoffe in die Dialyseflüssigkeit ebenfalls kein Konzentrationsgefälle auf, so daß das fertige Produkt nicht beeinträchtigt wird.

In Weiterbildung der Erfindung können bei der fraktionierten Vakuumdestillation zusätzlich zum Ethanol weitere unerwünschte Bestandteile entzogen werden, beispielsweise Acetaldehyd und schweflige Säure, so daß gegenüber dem ursprünglichen Getränk sogar eine Verbesserung erzielt werden kann. Zweckmäßig wird beim fertigen Produkt der Volumenverlust durch den Alkoholentzug sowie durch den Entzug der unerwünschten Bestandteile nicht ausgeglichen, z. B. durch den Zusatz von Wasser, um die geschmackliche Veränderung durch den Alkoholentzug wenigstens teilweise durch Aufkonzentration der Geschmacks- und Aromastoffe auszugleichen.

Das Dialysat, das nach dem Entzug des Alkohols (Ethylalkohol = Ethanol) und gegebenenfalls der unerwünschten Bestandteile sowie dem Zusatz der erwünschten Geschmacks- und Aromastoffe kontinuierlich wiederverwendet wird, also im Kreislauf geführt ist, erleidet ebenfalls Volumenverluste, die dann zweckmäßig durch Zusetzen des vergorenen Getränks im ursprünglichen Zustand ausgeglichen werden. Das Zusetzen erfolgt dabei mit Vorteil vor der Destillation, um den Alkoholgehalt des vergorenen Getränks beim Destillieren mit zu erfassen.

Als Dialysemembran wird in Weiterbildung der Erfindung eine hydrophile, also wasserbenetzbare Membran verwendet.

Das Verfahren nach der Erfindung läßt sich in weiterer Ausbildung auch zur Herstellung von Getränken mit reduziertem Kaloriengehalt verwenden, und zwar dadurch, daß ein zuckerhaltiges Getränk vergoren und dann dem erfindungsgemäßen Verfahren unterworfen wird. Durch das Vergären wird der ursprüngliche Zuckergehalt in Alkohol umgewandelt, so daß dann nach Entfernung des Alkohols ein Getränk mit stark reduziertem Kaloriengehalt erhalten wird.

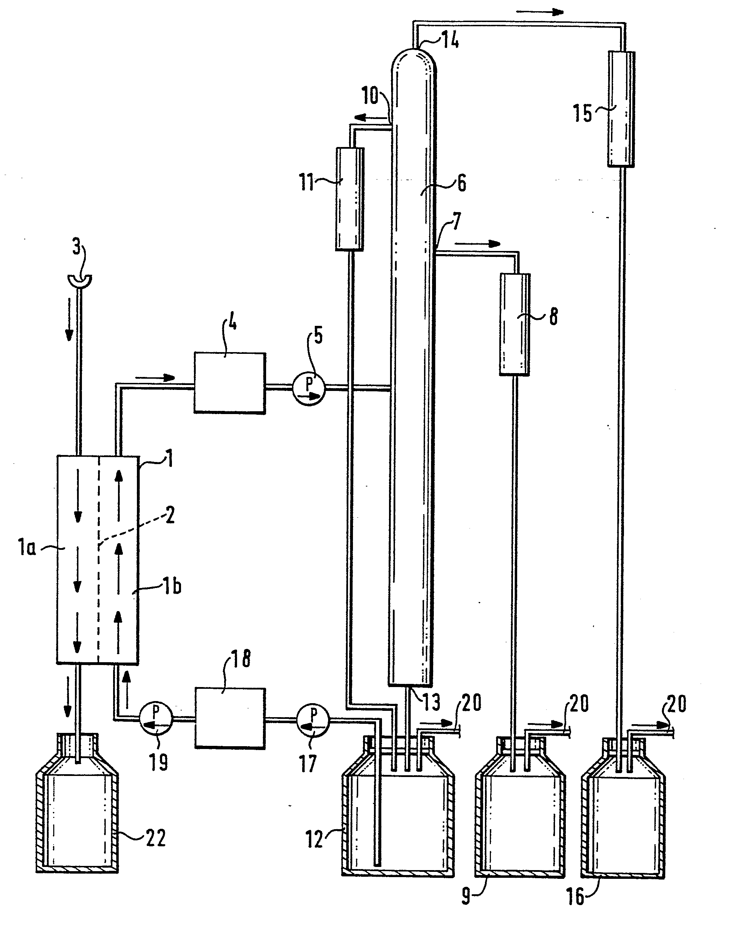

In der Zeichnung ist eine Vorrichtung zur Durchführung des Verfahrens schematisch dargestellt.

Ein Dialysemodul 1 ist durch eine Membran 2 in zwei Kammern unterteilt. Durch die in der Zeichnung linke Kammer 1a strömt das bei 3 zugegebene vergorene Getränk, dem der Alkohol entzogen werden soll. Durch die rechte Kammer 1b wird im Gegenstrom die Dialysatflüssigkeit geführt, die zu Beginn des Verfahrens aus dem gleichen vergorenen Getränk besteht. Nach Austritt aus der Kammer 1b gelangt die Dialysatflüssigkeit zunächst in einen Pufferbehälter 4 und wird dann mittels einer Pumpe 5 einer Destillierkolonne 6 handelsüblichen Aufbaus zugeführt. Die Destillierkolonne 6 enthält eine Anzahl von Böden, so daß bei 7 der Ethanolgehalt entzogen und nach Verflüssigung in einem Kühler 8 einem Sammelgefäß 9 zugeführt werden kann. An einem oder auch mehreren weiteren Böden (nicht dargestellt) können bei 10 die im fertigen Produkt erwünschten Aroma- und Geschmacksstoffe entzogen werden, die nach Durchlauf durch einen Kühler 11 in einen Vorratsbehälter 12 geführt werden. Dieser Behälter 12 nimmt die bei 13 aus der Kolonne 6 austretende Dialysatflüssigkeit in Form des vergorenen Getränks auf, dem der Alkohol entzogen worden ist. Schließlich treten am Ende der Kolonne bei 14 Bestandteile des vergorenen Getränks aus, die im fertigen Produkt unerwünscht sind. Sie gelangen über einen weiteren Kühler 15 in einen Behälter 16. Die Dialysatflüssigkeit wird aus dem Behälter 12 über eine Pumpe 17, einen Pufferbehälter 18 sowie eine weitere Pumpe 19 wieder der Kammer 1b im Dialysemodul 1 zugeführt, läuft also im Kreis um.

Da die Destillation im Vakuum erfolgen soll, sind die Gefäße 9, 12, 16 geschlossen und besitzen, wie schematisch gezeigt, je einen Vakuumanschluß 20. Zusätzliche Vakuumanschlüsse können in an sich bekannter Weise an der Destillierkolonne 6 vorhanden sein. Wegen der Destillation im Vakuum sind auch die Pufferbehälter 4 und 18 erforderlich, damit das Dialysemodul 1 unter normalem Atmosphärendruck betrieben werden kann.

Als Dialysemodul 1 wird zweckmäßig eine an sich bekannte Ausführung verwendet, bei der zur Vergrößerung der Membranoberfläche eine Anzahl von Kammern, die durch geschichtete Platten gebildet werden, fließtechnisch parallelgeschaltet sind. Als Membran 2 werden handelsübliche, wasserbenetzbare Membranen verwendet, die beispielsweise aus nativer Zellulose, aus Polyamiden oder Polysulfonaten bestehen. Die Fließgeschwindigkeit des bei 3 zugeführten vergorenen Getränks, das nach Durchlauf durch die Kammer 1a und Entzug des Alkoholgehalts als Fertigprodukt einem Behälter 22 zugeführt wird, ist ebenso wie die Fließgeschwindigkeit der Dialysatflüssigkeit in der Kammer 1b so einzustellen, daß bei möglichst vollständigem Entzug des Alkoholgehaltes eine möglichst große Ausbeute erhalten wird.

Zu den bei 10 der Destillierkolonne 6 entnommenen Inhaltsstoffen, die im fertigen Produkt im Hinblick auf dessen Geschmack erwünscht sind, zählen beispielsweise Propanol I, höhere Aldehyde, Acetate und Ester. Die bei 14 entnommenen Inhaltsstoffe, die im fertigen Produkt unerwünscht sind und daher nach Sammeln im Gefäß 16 beseitigt werden, umfassen neben schwefliger Säure ($SO_2$) Acetaldehyde, Ethylformiat, Ethylacetat und ähnliche Stoffe. Der gewonnene Alkohol im Gefäß 9 kann entweder als Produkt veräußert oder auch zur Energiegewinnung für den Betrieb der Anlage benutzt werden.

6

Patentansprüche

1. Verfahren zur Herstellung von vergorenen Getränken, insbesondere Wein, mit verringertem Alkoholgehalt unter Anwendung einer Dialyse, bei der eine Dialysatflüssigkeit einerseits und das vergorene Getränk im ursprünglichen Zustand andererseits auf getrennten Seiten einer Dialysemembran (2) entlanggeführt werden, der Dialysatflüssigkeit Alkohol durch Vakuumdestillation entzogen und diese dann wieder als Dialysatflüssigkeit verwendet wird, dadurch gekennzeichnet, daß als Dialysatflüssigkeit das vergorene Getränk im ursprünglichen Zustand verwendet wird und daß die bei einer fraktionierten Vakuumdestillation anfallenden, im Produkt erwünschten Geschmacks- und Aromastoffe der Dialysatflüssigkeit wieder zugesetzt werden.

2. Verfahren nach Anspruch 1, dadurch gekennzeichnet, daß bei der fraktionierten Vakuumdestillation neben dem Ethanolgehalt zusätzliche, im Produkt unerwünschte Bestandteile entzogen werden.

3. Verfahren nach Anspruch 1 oder 2, dadurch gekennzeichnet, daß dem Dialysat das vergorene Getränk im ursprünglichen Zustand zum Ausgleich der Volumenverluste beim Destillieren zugesetzt wird.

4. Verfahren nach Anspruch 3, dadurch gekennzeichnet, daß das Zusetzen vor der Destillation erfolgt.

5. Verfahren nach einem der Ansprüche 1 bis 4, dadurch gekennzeichnet, daß als Dialysemembran eine hydrophile (wasserbenetzbare) Membran verwendet wird.

6. Verwendung des Verfahrens nach einem der Ansprüche 1 bis 5 zur Herstellung von kalorien- und alkoholreduzierten Getränken, dadurch gekennzeichnet, daß ein zuckerhaltiges Getränk vergoren und dann dem Verfahren nach einem der Ansprüche 1 bis 5 unterworfen wird.